# FASCICULE DE BREVET EUROPEEN

(11) **EP 3 674 741 B1**
(45) Date de publication et mention de la délivrance du brevet: **22.11.2023**
(21) Numéro de dépôt: 19219570.9
(22) Date de dépôt: 23.12.2019
(51) Int. Cl.: G01S 7/02, G06N 3/08, G06F 18/2321, G06F 18/2413, G06N 3/044, G06N 3/045, G06V 10/764

(54) **SYSTÈME ET PROCÉDÉ D'IDENTIFICATION DE SOURCE RADAR**
IDENTIFIZIERUNGSSYSTEM UND -VERFAHREN EINER RADARQUELLE
SYSTEM AND METHOD FOR IDENTIFYING A RADAR SOURCE

(30) Priorité: 27.12.2018 FR 1874115
(43) Date de publication de la demande: 01.07.2020
(73) Titulaire: Avantix, 13100 Aix-en-Provence (FR)
(72) Inventeur: CHEFSON, Loïc, 13100 AIX EN PROVENCE (FR); CHARTON, Philippe, 13100 AIX EN PROVENCE (FR); CORTIAL, François, 13510 EGUILLES (FR); ALLOUCHE, Théo, 69100 VILLEURBANNE (FR)
(74) Mandataire: Novagraaf Technologies

(56) Documents cités:
- CN-A- 101 893 704
- CN-A- 105 631 484
- CN-A- 108 416 290
- US-A1- 2018 313 880
- SHAPERO SAMUEL A ET AL: "Identifying Agile Waveforms with Neural Networks", 2018 21ST INTERNATIONAL CONFERENCE ON INFORMATION FUSION (FUSION), ISIF, 10 juillet 2018 (2018-07-10), pages 745-752, XP033397854, DOI: 10.23919/ICIF.2018.8455370
- ZHOU ZHIWEN ET AL: "Automatic Radar Waveform Recognition Based on Deep Convolutional Denoising Auto-encoders", CIRCUITS, SYSTEMS AND SIGNAL PROCESSING, CAMBRIDGE, MS, US, vol. 37, no. 9, 29 janvier 2018 (2018-01-29), pages 4034-4048, XP036566766, ISSN: 0278-081X, DOI: 10.1007/S00034-018-0757-0 [extrait le 2018-01-29]
- CAIN LINDSAY ET AL: "Convolutional neural networks for radar emitter classification", 2018 IEEE 8TH ANNUAL COMPUTING AND COMMUNICATION WORKSHOP AND CONFERENCE (CCWC), IEEE, 8 janvier 2018 (2018-01-08), pages 79-83, XP033326743, DOI: 10.1109/CCWC.2018.8301627
- ZHANG XIAONAN ET AL: "A hybrid method for classification and identification of emitter signals", 2017 4TH INTERNATIONAL CONFERENCE ON SYSTEMS AND INFORMATICS (ICSAI), IEEE, 11 novembre 2017 (2017-11-11), pages 1060-1065, XP033292621, DOI: 10.1109/ICSAI.2017.8248442

## Description

### DOMAINE TECHNIQUE DE L'INVENTION

La présente invention concerne le domaine des RADAR, des sources de radiation radar et du Renseignement d'Origine Electro-Magnétique (ROEM) d'une manière générale. La présente invention concerne plus particulièrement un procédé et un système d'identification de sources radar.

### ETAT DE LA TECHNIQUE ANTERIEURE

Il existe, dans le domaine du ROEM, une difficulté persistante pour identifier les sources radar de façon rapide, efficace et fiable.

Il est connu dans l'art antérieur divers systèmes ou procédés d'identification de sources radar, comme par exemple ceux décrits dans les demandes de brevet CN105631484A, CN101893704B ou CN108416290A.

On peut également citer les documents « Identifying Agile Waveforms with Neural Networks » de Samuel Shapero et al. in 21st International Conférence on Inforamtion Fusion, ISIF, 2018, « Automatic Radar Waveform Recognition Based on Deep Convolutional Denoising Auto-encoders » de Zhou et al. in Circuits, Systems and Signal Processing, 2018, « Convolutional neural networks for radar emitter classification » de Cain et al. in IEEE 8th Annual Computing and Communication workshop and Conférence (CCWC), 2018, et « A hybrid method for classification and identification of emitter signais » de Zhang et al. in 4th International Conférence on Systems and Informatics (ICSAI), IEEE, 2017.

Les diverses solutions connues sont souvent qualifiées d'intelligence artificielle et utilisent généralement des réseaux de neurones et des méthodes telles que le « deep learning » (« apprentissage profond » d'après la terminologie anglo-saxonne) ou d'autres méthodes de classification.

Un problème important dans le domaine est lié au signal radar lui-même car il est composé de signaux radar mélangés de diverses sources qu'il n'est pas toujours aisé de discriminer, notamment à cause de divers paramètres tels que la force du signal, la localisation de la source, les perturbations environnantes, etc.

Dans ce contexte, il est intéressant de proposer un système et un procédé permettant d'optimiser l'identification radar.

### EXPOSE DE L'INVENTION

Un but de la présente invention est de pallier au moins certains inconvénients de l'art antérieur en proposant un système et un procédé d'identification de source radar qui soit rapide, efficace et fiable.

Ce but est atteint par un procédé d'identification de source radar, à partir d'un signal généré par au moins un capteur d'impulsions radar, mis en oeuvre dans un système d'identification radar accédant à au moins une base de données de renseignement (BDR), ledit capteur détectant et caractérisant les impulsions produites par les radars en présence autour du capteur en générant ledit signal sous la forme de descripteurs d'impulsions (PDW), le procédé comportant au moins un traitement des données par au moins un modèle de réseaux de neurones multi-couches, ledit traitement étant caractérisé en ce qu'il comporte au moins deux phases successives consistant en un premier traitement en mode supervisé, c'est-à-dire en recherchant des émetteurs déjà connus et identifiés en bases de données, et un second traitement en mode non-supervisé, c'est-à-dire en recherchant des émetteurs non connus qui ne sont pas référencés en bases de données, le procédé comportant une étape de conditionnement préalable audit traitement, et ledit au moins un modèle est entraîné sur la base de résultats validés fournis par la base de données de renseignement (BDR) , l'étape de conditionnement comportant un regroupement des descripteurs d'impulsions (PDW) par comparaison d'au moins un paramètre parmi au moins la fréquence et la durée des impulsions.

Ce but est également atteint par un système d'identification de source radar, comprenant des moyens informatiques de traitement de données aptes à traiter les données générées par des capteurs radar, caractérisé en ce que les moyens informatiques exécutent des instructions permettant la mise en oeuvre du procédé selon l'invention.

Selon une autre particularité, le regroupement de l'étape de conditionnement est un regroupement paramétrique ou un regroupement densitométrique utilisant les données radar de base pour calculer au moins un des paramètres suivants :
- Dispersion fréquence
- Dispersion durée
- Dispersion niveau
- Dispersion de la Période de Répétition des Impulsions (PRI),
- Histogramme de fréquence,
- Histogramme de durée,
- Histogramme de niveau,
- Histogramme de la Période de Répétition des Impulsions (PRI),
- Données de position,
- Modulation la plus occurrente

Selon une autre particularité, le regroupement de l'étape de conditionnement est un regroupement par tuilage utilisant les données radar de base pour calculer au moins un des paramètres suivants :
- La fréquence,
- La durée d'impulsion,
- Le niveau
- La différence (DTOA) entre les temps d'arrivée successifs des descripteurs d'impulsion (PDW).

Selon une autre particularité, ledit modèle de réseaux de neurones est un modèle de type perceptron multicouche (MLP).

Selon une autre particularité, ledit modèle de réseaux de neurones est un modèle de type réseau de neurones convolutif (CNN).

Selon une autre particularité, ledit modèle de réseaux de neurones est un modèle de type réseau de neurones récurrent (RNN).

Selon une autre particularité, le traitement supervisé utilise en algorithme d'apprentissage profond (deep learning).

Selon une autre particularité, le traitement non-supervisé utilise un algorithme de classification par groupe (clustering)

### BREVE DESCRIPTION DES FIGURES

D'autres particularités et avantages de la présente invention apparaîtront plus clairement à la lecture de la description ci-après, faite en référence aux dessins annexés, dans lesquels :
[Fig. 1] représente une vue d'ensemble d'un procédé selon certains modes de réalisation,
[Fig. 2] illustre les résultats obtenus par un procédé selon certains modes de réalisation,
[Fig. 3a] représente une vue d'ensemble de la phase d'apprentissage d'un procédé selon certains modes de réalisation,
[Fig. 3b] représente une vue d'ensemble de la phase d'exploitation d'un procédé selon certains modes de réalisation,
[Fig. 4] illustre les résultats obtenus par un procédé selon certains modes de réalisation,
[Fig. 5] illustre des étapes d'un procédé selon certains modes de réalisation,
[Fig. 6] illustre une étape de décision d'un procédé selon certains modes de réalisation,
[Fig. 7] illustre les apprentissages des traitements supervisés et non-supervisés d'un procédé selon certains modes de réalisation,
[Fig. 8a] illustre une étape de conditionnement d'un procédé selon une première variante,
[Fig. 8b] illustre une étape de conditionnement d'un procédé selon une seconde variante,
[Fig. 8c] illustre des étapes de conditionnement d'un procédé selon une troisième variante,
[Fig. 9] illustre un procédé selon certains modes de réalisation.

### DESCRIPTION DETAILLEE DE L'INVENTION

La présente invention concerne un système et un procédé d'identification de source radar. D'une manière générale, le système comporte des moyens informatiques exécutant des instructions permettant la mise en oeuvre du procédé. Aucun détail ne sera fourni sur les moyens informatiques bien connus de l'homme de métier, car la présente invention peut être mise en oeuvre sur divers dispositifs ou infrastructure informatique, en réseau ou non.

La présente demande utilise divers acronymes parmi la liste ci-dessous, dans laquelle la définition est fournie pour chacun d'eux, afin de faciliter la compréhension du lecteur.

**[Table 1]**

| Terme | Définition |
|---|---|
| ROEM | Renseignement d'Origine Electro-Magnétique |
| BDR | Base de Résultats |
| BDTN | Base de Données Techniques Navales |
| BTl | Base Technique d'identification |
| CERES | Capacité de Renseignement Electromagnétique Spatiale |
| PIC | Produit d'interception CERES |
| ELINT | ELectronic INTelligence |
| CTE | Chaîne de Traitement ELINT |
| CTE-A | Chaîne de Traitement ELINT Automatique |
| CTE-M | Chaîne de Traitement ELINT Manuel |
| CTE-OC | Chaîne de Traitement ELINT d'Outils Complémentaires |
| CTE-RM | Chaîne de Traitement ELINT de Reprise Manuelle |
| IA | Intelligence Artificielle |
| IHM | Interface Homme Machine |
| IHS | Interface Homme Système |
| MODULE | Ensemble unitaire et cohérent exécutant une suite d'instruction avec des entrées, sorties et interfaces |
| OUTIL | Moyen d'édition , de mesure et de modification des entrées/sorties des modules |
| DI | Durée d'impulsion |
| DOA | Direction Of Arrival (direction d'arrivée) |
| DTOA | Delta Time of Arrival (différence d'instants d'arrivée) |
| ELCIB | Elément Ciblé |
| FN | False Négative |
| FP | False Positive |
| GC | Graphes de Contrôle |
| PRI | Période de Répétition des Impulsions |
| PRM | Période de Répétition du Motif |
| IS | Impulsion synthétique |
| RNN | Recurent Neural Network |
| CNN | Convolutional Neural Network |
| MLP | Multi Layer Perceptron |
| TIA | Type d'informations Attendues |
| TOA | Time of Arrival (instant d'arrivée) |
| TN | True Négative |
| TP | True Positive |
| SI | Système d'information |
| GT | Groupe de Travail |

Le procédé de traitement détaillé dans ce document est un procédé de classification des signaux radars. Il permet à partir de signaux enregistrés par un capteur quelconque de déterminer quels ont été les radars à l'origine de ces signaux. La classification se traduit au minimum par une identification d'une signature radar relativement à un modèle de radar. Si les données le permettent, la classification peut conduire à une identification d'une instance physique de radar.

Les modèles employés pour cette classification supervisée apprennent de résultats issus d'une base de données (BDR). Cette BDR regroupe un vaste ensemble de signaux radars pour lesquels une classification a déjà été réalisée et validée par des algorithmes ou directement par des opérateurs. D'où la notion d'apprentissage par fusion des expériences : les modèles apprennent des résultats obtenus quelle que soit leur provenance et tirent donc bénéfices de toutes les techniques déjà utilisées dans le domaine.

Les fonctionnalités proposées requièrent la consultation des bases de données (BTI, BDR) d'un système de renseignement radar / ROEM. Elles bénéficient des évolutions de ces bases lors des incréments d'apprentissage. Les résultats obtenus sont réinjectés dans des bases spécifiques différente des BTI/BDR pour garantir une indépendance totale vis-à-vis du système de ROEM. Cependant, l'injection dans les bases de données (BTI, BDR) sur action explicite de l'utilisateur de la chaine manuelle (CTE_M) est réalisable.

Les données radar en entrée du traitement sont les données produites par un capteur radar capable de détecter et caractériser les impulsions produites par les radars en présence autour du capteur. Cette détection et caractérisation des impulsions se synthétisent sous la forme de « mots descripteurs d'impulsions » ou PDW (pour l'anglais « Pulse Description Word ») résumant le contenu des impulsions.

Les PDW contiennent à minima les informations suivantes :
- La fréquence de l'impulsion,
- Le niveau de l'impulsion,
- La durée de l'impulsion,
- L'instant d'arrivée de l'impulsion

En fonction des capacités du capteur, les PDW peuvent contenir en supplément les informations suivantes :
- Modulation de l'impulsion,
- Position ou géolocalisation de l'impulsion.

Les données radars se résument donc à une liste de PDW qui grossit au fur-et-à- mesure de l'arrivée au niveau du capteur des impulsions des radars environnants. La précision des informations contenue dans les PDW dépend des performances du capteur et peut varier en fonction des conditions d'interception (un radar lointain émettant à faible puissance sera généralement moins bien perçu par le capteur et donc ses impulsions seront moins bien caractérisées).

### Modèles multi-couches

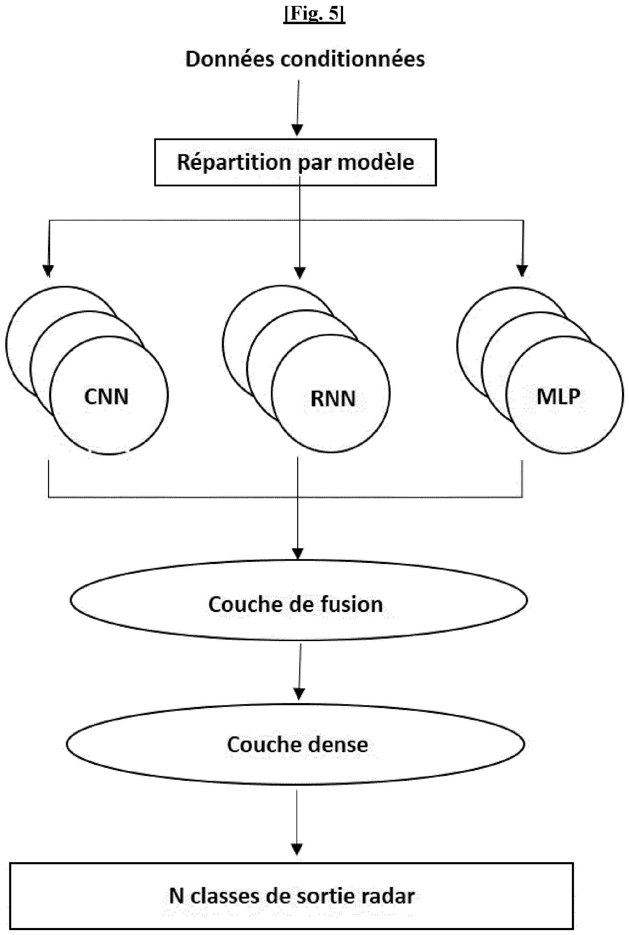

Les données relatives aux signaux radar recueillies par les systèmes ROEM sont généralement traitées par des modèles de réseaux de neurones, par exemple de type MLP, CNN ou RNN. La figure 5 illustre un exemple d'un tel modèle. Le nombre de couches pour chaque modèle n'est pas fixé et à adaptable en fonction des données disponibles pour l'apprentissage.

Par ailleurs, le choix du modèle peut également varier en fonction du paramètre étudié. Par exemple, dans le cas d'un conditionnement par tuilage, les images réalisées sur la fréquence peuvent alimenter des MLP alors que les images réalisées sur le niveau alimenteront des CNN.

Les résultats obtenus par chaque modèle utilisé sont convoyés vers une couche de fusion puis une couche réalisant une pondération pour chaque classe de radar existante dans la base de données BDR.

Les fonctions d'activation des neurones sont définies par les méthodes existantes classiquement fournies dans les librairies de modèles « Deep Learning » et « Machine Learning » : sigmoïde, ReLu, etc...

Les modèles sont entraînés sur la base des résultats validés fournis par la BDR en utilisant par descente de gradient d'une fonction de coût de type entropie croisée. D'autres types de fonction de coût pourront être utilisées en fonction des données mises à disposition.

### Décision

Dans certains modes de réalisation, le procédé comporte une étape de décision générant des données consolidées par un seuil de décision relatif à leur cohérence.

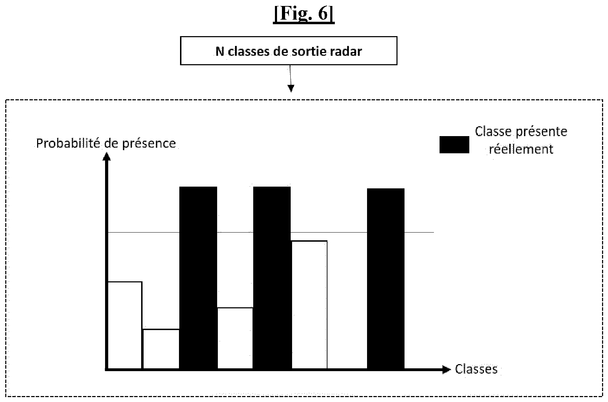

Un exemple, illustré en figure 6, d'une telle étape de décision repose sur un seuillage pour sélectionner les source identifiées qui ont le meilleur taux de correspondances avec les classes radars existantes.

A l'issu du traitement des données capteurs, les modèles employés fournissent en sortie un taux de correspondance à chacune des classes radars existantes dans la base de données. Si la base contient les enregistrements de N radars différents, alors on obtient en sortie un vecteur de taille N contenant un matching score pour chaque classe radar.

Le matching score peut suffire comme résultat d'interprétation des données par le modèle, cependant pour un opérateur radar il est rapidement fastidieux de visualiser ce résultat lorsque le nombre de classes radars à trouver devient grand. Le matching score est donc post-traité par un fonction de seuillage incluse dans les modèles et entraînée sur les données d'apprentissage. On a donc une couche propre à la décision dans le modèle.

Les métriques possibles pour l'entraînement de cette couche de décision sont :
- Le ratio de résultats exacts,
- Le rappel (TP / (TP + FN)) et la précision (TP / (TP + FP))
- Le F1 score (moyenne harmonique de la précision et du rappel).
Avec TP : vrai positif, FN : faux négatif, FP : faux positif.

### Traitements supervisé et non-supervisé

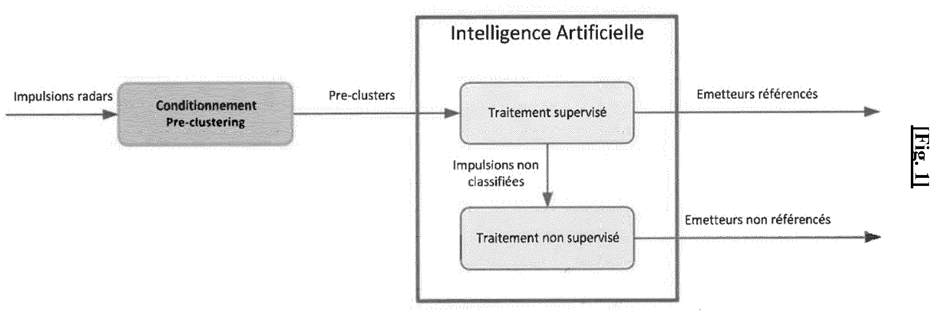

Dans certains modes de réalisation, le système et le procédé utilisent un traitement en deux phases successives : un traitement supervisé et un traitement non supervisé, comme indiqué sur la figure 1.

Un premier algorithme utilise l'intelligence artificielle en mode supervisé c'est-à-dire en recherchant des émetteurs déjà connus et identifiés en bases de données (BTI ou BDR).

Le second algorithme, complémentaire du premier, utilise l'intelligence artificielle en mode NON supervisé, c'est-à-dire en recherchant des émetteurs non connus qui ne sont pas référencés en bases de données (BTI ou BDR).

Le traitement supervisé repose de préférence sur au moins un algorithme de type Deep Learning. Le modèle utilisé réalise de préférence un apprentissage sur la BDR et classifie les impulsions selon les émetteurs référencés.

Une analyse de complétude (vérification que toutes les impulsions ont été attribuées à une source radar) permet de récupérer les éventuelles impulsions non classifiées, afin de les injecter dans le traitement non-supervisé.

Le traitement non supervisé repose de préférence sur au moins un algorithme de type Clustering. Le modèle réalise de préférence un apprentissage sur la BDR et permet de trouver de nouvelle signature dans les impulsions non classifiées.

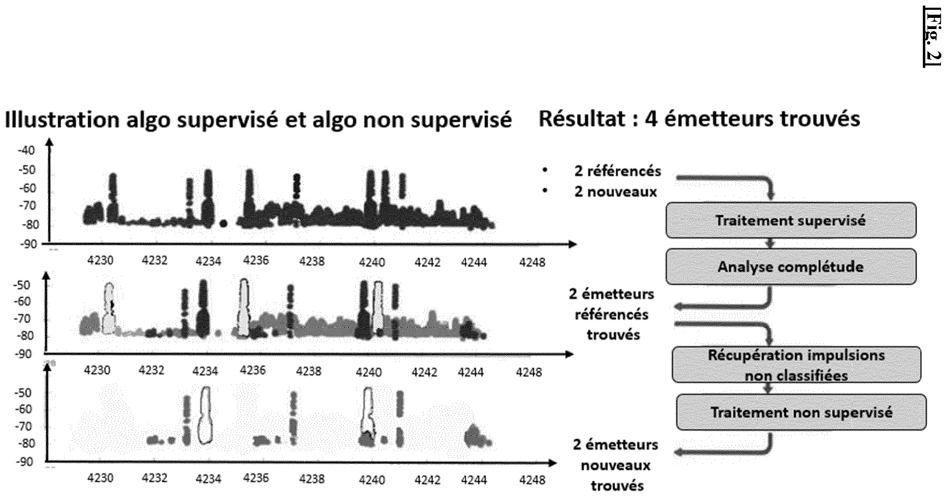

La figure 2 montre le principe du traitement en deux phases successives, dans l'exemple d'un signal recueilli contenant l'imbrication des impulsions de quatre sources radars, en supposant que deux de ces radars soient référencés en base de données (BTI/BDR) et qu'il y a deux nouveaux radars, inconnus en base de données (BTI/BDR).

La première phase est un traitement supervisé dont le but est de retrouver dans les signaux d'entrée des radars référencés en base de données (BTI/BDR). Cette phase permet de retrouver, dans le signal complexe (en noir, ligne du haut sur la Fig.2) les deux radars connus (un en grisé et l'autre en blanc, dans la ligne du milieu sur la Fig.2).

Ensuite, dans une seconde phase, après avoir éliminé du signal les impulsions rattachées à ces deux radars connus, les impulsions résiduelles sont injectées dans un traitement non supervisé. Ce traitement non supervisé doit répartir de façon pertinente les impulsions en plusieurs radars (deux dans cet exemple), mais ceci est fait sans connaitre à priori ni le nombre, ni le type de radars.

Les impulsions ainsi regroupées servent à caractériser deux nouveaux radars enregistrés en base de données (BDR) (grisé et blanc, ligne du bas sur la Fig.2), par exemple approbation d'un opérateur.

Lors des prochaines interceptions de la même configuration de signal, les quatre radars pourront être détectés de façon optimale en mode supervisé car ils seront tous référencés en base de données (BTI ou BDR)

### Apprentissage :

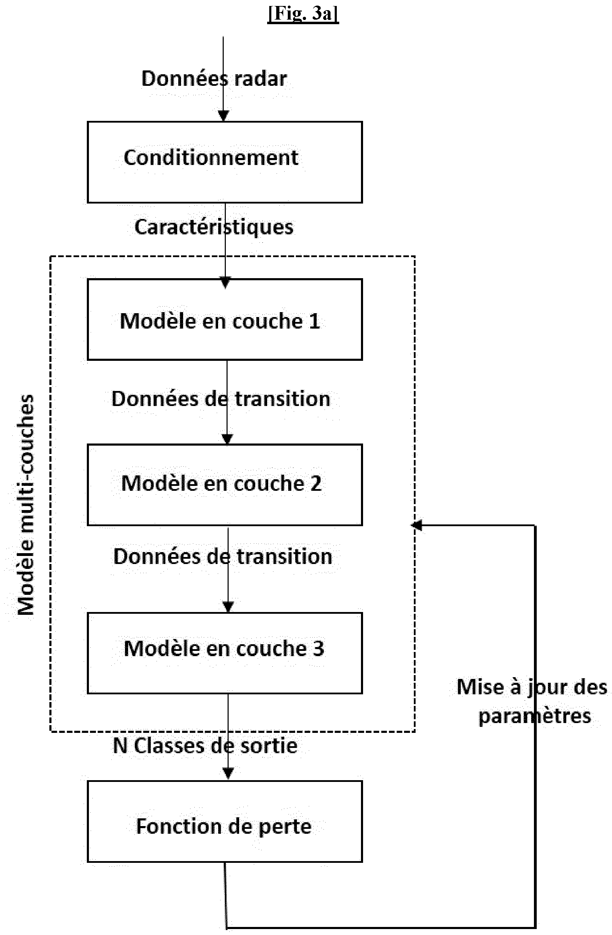

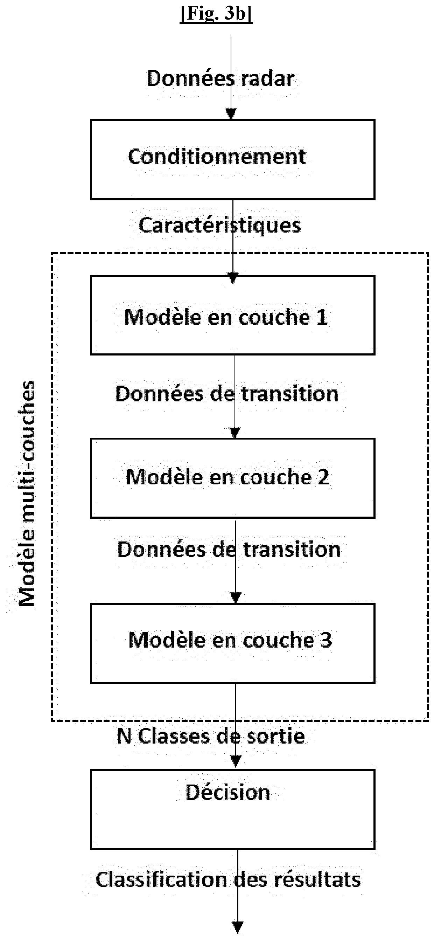

Le schéma présenté en figure 3b montre le traitement dans sa phase d'exploitation après apprentissage, tandis que la figure 3a montre le traitement dans sa phase d'apprentissage.

Dans sa phase d'apprentissage, le traitement est exactement le même hormis le fait qu'une fonction de coût récupère en sortie du modèle les classes de sortie et calcule les variations de paramètres à appliquer au modèle pour minimiser le coût.

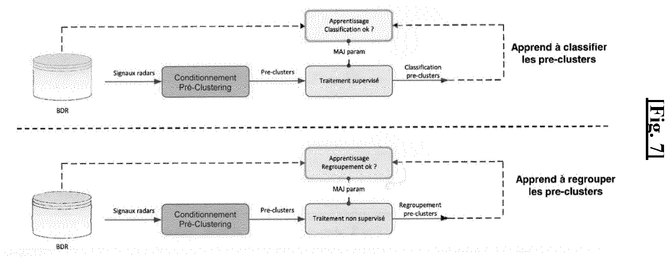

Un exemple d'apprentissage est représenté sur la figure 7, pour les traitements supervisé et non-supervisé
Traitement des signaux radar par IA : apprentissage
- Apprentissage : Apprentissage à partir des données fournies par la BDR (enregistrements radar dont les regroupements à faire sont étiquetés)
- Préparation amont : Conditionnement des enregistrements pour passer des impulsions au preclusters (les algos apprennent à classer/regrouper les preclusters)

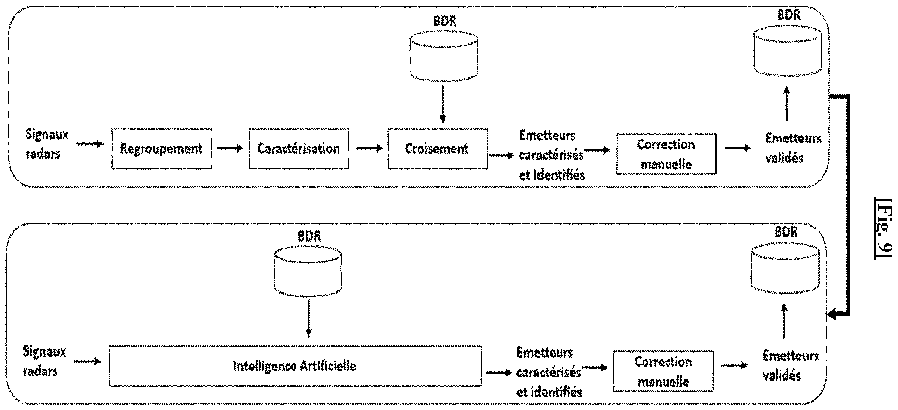

La figure 9 illustre une comparaison entre, d'une part, l'approche classique (en haut) dans laquelle les opérateurs doivent reconnaître eux-mêmes les signaux, par regroupement, caractérisation et croisement avec une BDR pour fournir une liste d'émetteurs validés et, d'autre part, une approche d'intelligence artificielle comme dans la présente invention.

Dans certains modes de réalisation, il est prévu un algorithme alternatif supplémentaire pour la reprise manuelle, permettant à l'opérateur de combiner ces approches. La présente invention tire avantage de cette combinaison possible en apprenant à partir des entrées brutes et des sorties finales d'émetteurs validés, pour intégrer et fusionner le contenu des trois étapes de traitement : regroupement, caractérisation et croisement.

### Conditionnement

Dans certains modes de réalisation, le système et le procédé utilisent un pré-traitement des données recueillies, appelé ici « conditionnement », comme indiqué en figure 1.

Le conditionnement utilise au moins une information des PDW et de préférence au moins la fréquence et la durée de l'impulsion. Le conditionnement est une étape qui consiste à mettre en forme les données radars de manière à réduire et à homogénéiser les données qui alimenteront les modèles. Cette mise en forme se traduit par l'élaboration de features qui seront analysées par les modèles pour opérer la classification.

Les impulsions ne sont pas traitées directement de façon brute, mais au contraire, des groupes (ou pré-clusters) sont construits en amont sur analyse des signaux.

Les données conditionnées et leurs caractéristiques (« features ») sont construites à partir des informations de base des PDW : fréquence, niveau, durée, instant d'arrivée, modulation et position. L'intérêt du conditionnement est de soumettre les modèles à des données uniformes, quelles que soient les contextes de capture des données radars. D'autres avantages sont aussi de simplifier le problème du regroupement à quelques entités, de tirer des parti des connaissances métiers radar et de diminuer la complexité des algorithmes utilisés dans les modèles d'identification de source radar.

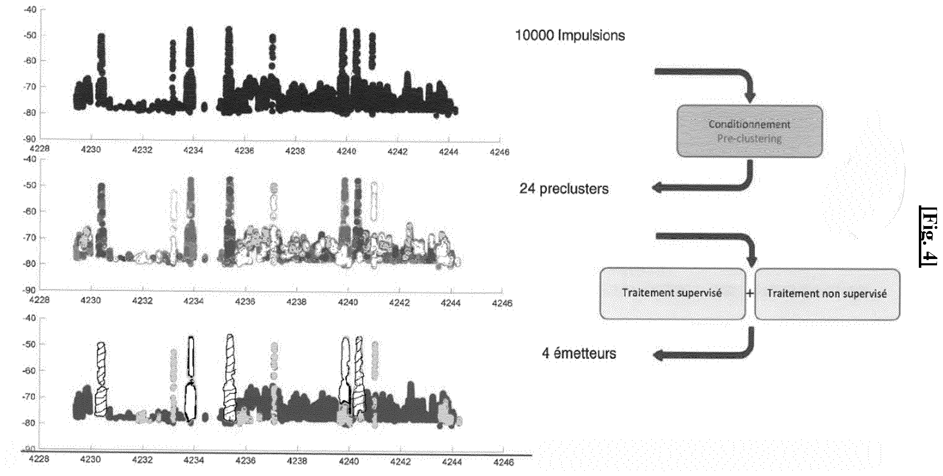

La figure 4 montre un exemple de résultats d'un traitement utilisant le conditionnement selon divers modes de réalisation.

Grâce au conditionnement des données (« pre-clustering »), on obtient une pluralité de potentiels groupes (pre-clusters) qui accélèrent les traitements supervisé et non-supervisé. La ligne du haut montre le signal brut à traiter, la ligne du milieu montrent les divers groupes en diverses nuances de gris et la ligne du bas montrent les quatre sources radar identifiées dans le signal (un noir, un gris, un blanc et un hachuré).

Il existe plusieurs manières de réaliser le conditionnement dans la classification supervisée. On en présente ici trois versions applicables dont :
- Regroupement paramétrique,
- Regroupement densitométrique,
- Tuilage.

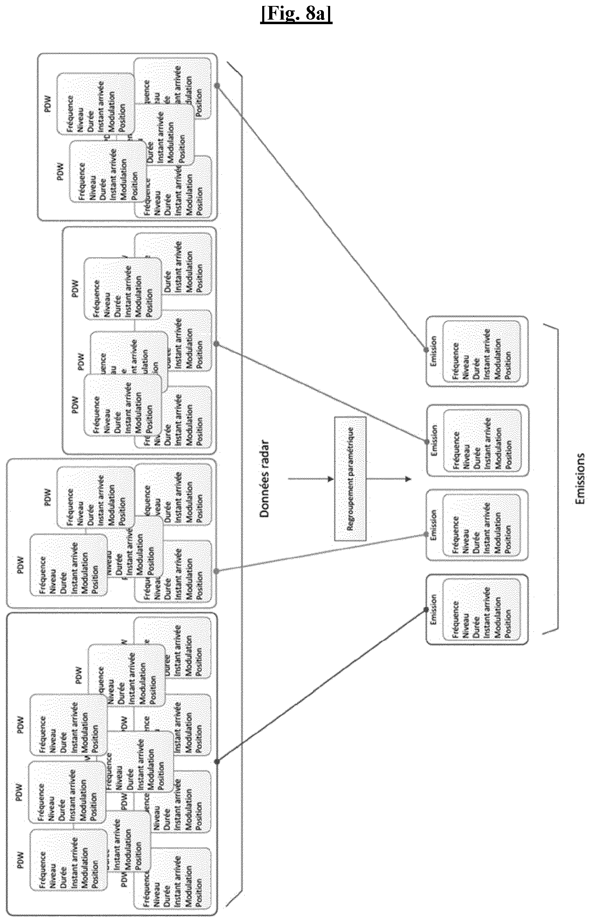

Ainsi, dans certains modes de réalisation, le conditionnement des données est réalisé par regroupement paramétrique, dont un exemple est représenté sur la figure 8a.

Le regroupement paramétrique consiste à regrouper les PDW de départ en groupes de PDW dont les paramètres sont proches. Chaque groupe contient des PDW dont les paramètres fréquence, durée, modulation et position sont identiques à des tolérances près (les paramètres niveau et instant d'arrivée sont généralement ignorés). Le choix des tolérances est réalisé empiriquement à partir de l'analyse d'un grand nombre de données radar.

Les groupes issus du regroupement paramétrique constituent des émissions radars. Une émission radar est construite à partir d'un nombre variable de PDW en fonction de la dispersion des données radars de base. Chaque émission est caractérisée par de nouvelles métriques calculées sur les PDW qu'elle contient.

Une émission peut ainsi être caractérisée par les informations suivantes :
- Dispersion fréquence : valeur min, valeur max, moyenne, écart type,
- Dispersion durée : valeur min, valeur max, moyenne, écart type,
- Dispersion niveau : valeur min, valeur max, moyenne, écart type,
- Dispersion PRI : valeur min, valeur max, moyenne, écart type,
- Histogramme de fréquence,
- Histogramme de durée,
- Histogramme de niveau,
- Histogramme de PRI,
- Données de position : position moyenne, ellipse d'incertitude,
- Modulation la plus occurrente.

En fonction du choix des tolérances lors de la création des émissions, on peut également avoir des informations d'agilité dont :
- Moments de fréquence,
- Moments de durée,
- Moments de PRI.

Après le conditionnement paramétrique, on passe d'une liste de PDW à une liste d'émissions dont les informations de caractérisation sont utilisées comme features par les modèles.

Le conditionnement par regroupement paramétrique peut être réalisé sur l'ensemble des PDW générés par le capteur ou par tranches temporelles de manière à conserver un cadencement temporel des features. Ce cadencement temporel permet d'utiliser des modèles de type convolutifs.

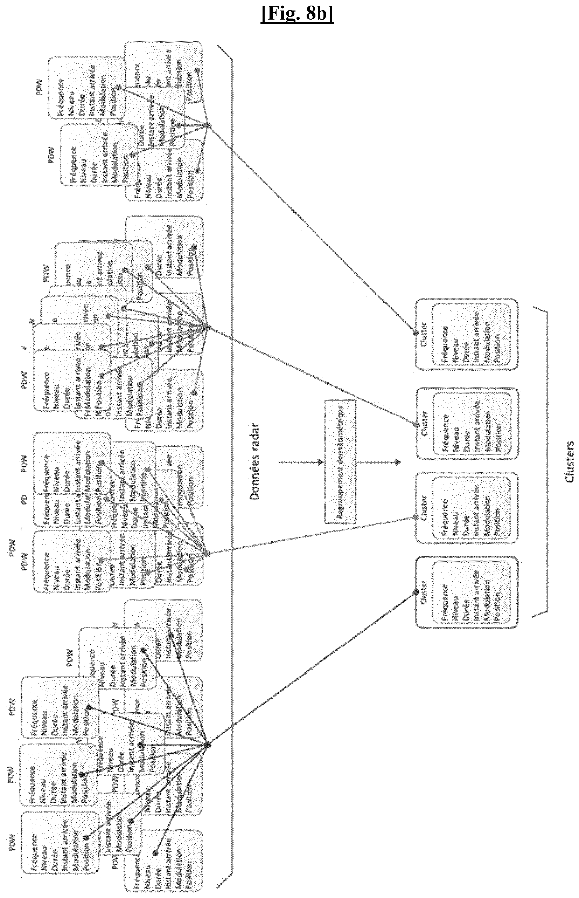

Dans certains modes de réalisation, le conditionnement des données est réalisé par regroupement densitométrique dont un exemple est représenté sur la Figure 8b.

Le conditionnement par regroupement densitométrique consiste à créer des groupes de PDW en analysant la densité des PDW dans un espace multidimensionnel où chaque dimension représente un paramètre des PDW. L'analyse de la densité exploitent les paramètres de fréquence, de durée, de modulation et de position (les paramètres niveau et instant d'arrivée sont généralement ignorés).

Contrairement au conditionnement par regroupement paramétrique, il n'y a pas de tolérances spécifiques à chaque paramètre. La densitométrie permet d'adapter la taille des groupes réalisés en fonction de la densité des PDW dans l'espace multidimensionnel. L'intérêt de cette méthode est de pouvoir créer des groupes s'adaptant aux diverses agilités intrinsèques aux radars et d'avoir de la robustesse sur les imprécisions du capteur.

La condition à la création d'un groupe est que celui-ci contient un nombre suffisant de PDW dans un espace de recherche fini. L'espace de recherche peut être adapté dynamiquement en fonction du nombre de PDW mis en groupes et permettent ainsi d'avoir des groupes de morphologies diverses. La technique s'apparente ici à une fonction de clustering par densité (type DBSCAN ou OPTICS).

Les groupes ici du regroupement densitométrique constituent des clusters radars. Un cluster radar est construit à partir d'un nombre variable de PDW en fonction de la densité des données radars de base dans l'espace multidimensionnel. Chaque cluster est caractérisé par de nouvelles métriques. Un cluster peut ainsi être caractérisé par les informations suivantes :
- Dispersion fréquence : valeur min, valeur max, moyenne, écart type,
- Dispersion durée : valeur min, valeur max, moyenne, écart type,
- Dispersion niveau : valeur min, valeur max, moyenne, écart type,
- Dispersion PRI : valeur min, valeur max, moyenne, écart type,
- Histogramme de fréquence,
- Histogramme de durée,
- Histogramme de niveau,
- Histogramme de PRI,
- Données de position : position moyenne, ellipse d'incertitude,
- Modulation la plus occurrente.

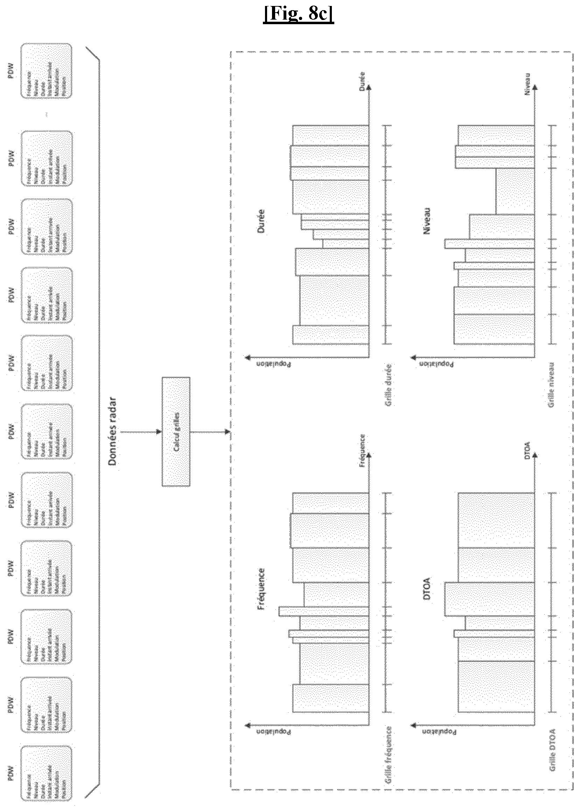

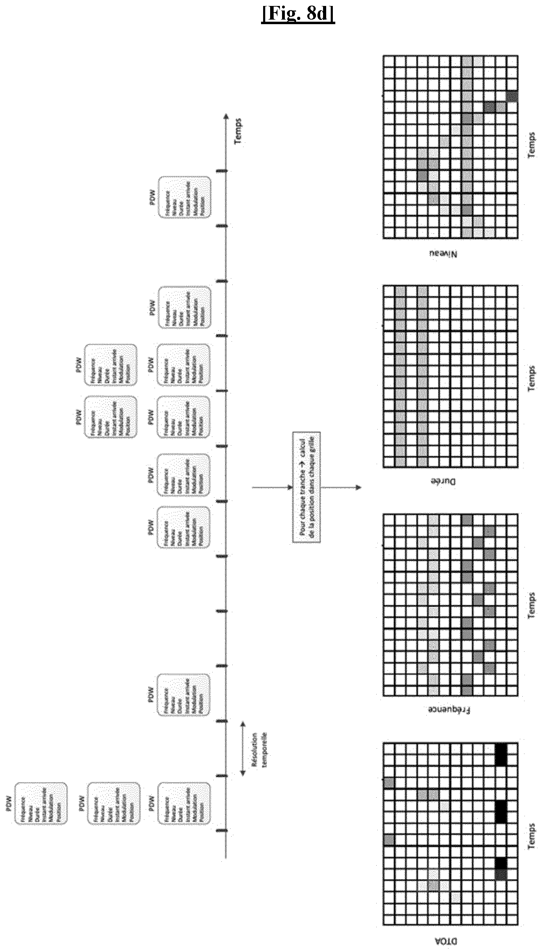

Dans certains modes de réalisation, le conditionnement des données est réalisé par tuilage, dont un exemple de fonctionnement est illustré sur les figures 8c et 8d.

Le conditionnement par tuilage consiste à obtenir une représentation graphique des PDW de départ sur certains paramètres en réalisant un échantillonnage temporel. Les paramètres exploités par le tuilage sont la fréquence, la durée d'impulsion, le niveau et le DTOA. Le DTOA est la différence entre les temps d'arrivée successifs des PDW. La figure 8c illustre le calcul des grilles de tri pour chaque paramètre utilisé.

Pour réaliser le tuilage, il est nécessaire de construire au préalable des grilles de tri pour chaque paramètre d'intérêt. Ces grilles de tri sont calculées empiriquement après analyse d'une grande quantité de données radar et permettent de définir pour chaque paramètre une liste de frontières qui serviront pour trier les PDW. Les frontières ne sont pas régulièrement espacées et sont plus concentrées pour les zones sur-représentées dans les données radars.

La génération de ces frontières pour chaque paramètre est conduite de façon à minimiser l'entropie sur l'ensemble des données radars étudiés et donc d'avoir dans toutes les zones délimitées par les frontières une représentation homogène (nombre de PDW quasi identique).

Une fois les grilles calculées, les données radars (PDW) sont ensuite triées selon ces grilles par tranche temporelle successive. Le découpage en tranche temporelle est fixé par un paramètre de résolution temporelle. On peut alors calculer pour chaque tranche de temps et pour chaque case d'une grille le nombre de PDW correspondants dans les données. La figure 8c illustre le tri pour chaque tranche temporelle.

Une fois le tri réalisé, on obtient pour chaque paramètre une représentation graphique en deux dimensions (paramètre x temps). La valeur du pixel (niveau de gris) représente la population de PDW présents dans le pixel.

De manière à obtenir le même format d'image, les données radars de base sont traitées par bloc, chaque bloc correspondant à une durée fixe, par exemple 10 secondes. Pour chacun des paramètres, la taille des images obtenues ne dépend plus que du nombre de cases de la grille et de la résolution temporelle choisie. Cette taille est fixe quelles que soient les données traitées.

En résumé, on obtient tous les durées blocs (toutes les 10 secondes par exemple), quatre images représentatives des PDW contenus dans la durée bloc :
- Une image sur la fréquence,
- Une image sur la durée,
- Une image sur le DTOA,
- Une image sur le niveau.

De manière optionnelle, en faisant varier la résolution temporelle, on peut obtenir une collection d'images plus grande pour chaque bloc.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'identification de source radar, à partir d'un signal généré par au moins un capteur d'impulsions radar, mis en oeuvre dans un système d'identification radar accédant à au moins une base de données de renseignement (BDR), ledit capteur détectant et caractérisant les impulsions produites par les radars en présence autour du capteur en générant ledit signal sous la forme de descripteurs d'impulsions (PDW), le procédé comportant au moins un traitement des données par au moins un modèle de réseaux de neurones multi-couches, ledit traitement étant **caractérisé en ce qu'**il comporte au moins deux phases successives consistant en un premier traitement en mode supervisé, c'est-à-dire en recherchant des émetteurs déjà connus et identifiés en bases de données et un second traitement en mode non-supervisé, c'est-à-dire en recherchant des émetteurs non connus qui ne sont pas référencés en bases de données, le procédé comportant une étape de conditionnement préalable audit traitement, et ledit au moins un modèle est entraîné sur la base de résultats validés fournis par la base de données de renseignement (BDR), l'étape de conditionnement comportant un regroupement des descripteurs d'impulsions (PDW) par comparaison d'au moins un paramètre parmi au moins la fréquence et la durée des impulsions.

2. Procédé selon la revendication 1, **caractérisé en ce que** le regroupement de l'étape de conditionnement est un regroupement paramétrique ou un regroupement densitométrique utilisant les données radar de base pour calculer au moins un des paramètres suivants :
- Dispersion fréquence
- Dispersion durée
- Dispersion niveau
- Dispersion de la Période de Répétition des Impulsions (PRI),
- Histogramme de fréquence,
- Histogramme de durée,
- Histogramme de niveau,
- Histogramme de la Période de Répétition des Impulsions (PRI),
- Données de position,
- Modulation la plus occurrente

3. Procédé selon la revendication 1, **caractérisé en ce que** le Le regroupement de l'étape de conditionnement est un regroupement par tuilage utilisant les données radar de base pour calculer au moins un des paramètres suivants :
- La fréquence,
- La durée d'impulsion,
- Le niveau
- La différence (DTOA) entre les temps d'arrivée successifs des descripteurs d'impulsion (PDW).

4. Procédé selon l'une des revendications 1 à 3, **caractérisé en ce que** ledit modèle de réseaux de neurones est un modèle de type perceptron multicouche (MLP).

5. Procédé selon l'une des revendications 1 à 3, **caractérisé en ce que** ledit modèle de réseaux de neurones est un modèle de type réseau de neurones convolutif (CNN).

6. Procédé selon l'une des revendications 1 à 3, **caractérisé en ce que** ledit modèle de réseaux de neurones est un modèle de type réseau de neurones récurrent (RNN).

7. Procédé selon la revendication 1, **caractérisé en ce que** le traitement supervisé utilise en algorithme d'apprentissage profond (deep learning).

8. Procédé selon l'une des revendications 1, **caractérisé en ce que** le traitement non-supervisé utilise un algorithme de classification par groupe (clustering)

9. Système d'identification de source radar, comprenant des moyens informatiques de traitement de données aptes à traiter les données générées par des capteurs radar, **caractérisé en ce que** les moyens informatiques exécutent des instructions permettant la mise en oeuvre du procédé selon l'une des revendications 1 à 8.

## Patentansprüche

1. Verfahren zum Identifizieren einer Radarquelle aus einem Signal, das durch mindestens einen Radarimpulssensor erzeugt wird, implementiert in einem Radaridentifizierungssystem, das auf mindestens eine Abfragedatenbank (BDR) zugreift, wobei der Sensor Impulse erfasst und charakterisiert, die durch die um den Sensor herum vorhandenen Radargeräte erzeugt werden, indem das Signal in Form von Impulsdeskriptoren (PDW) erzeugt wird, wobei das Verfahren mindestens eine Verarbeitung der Daten durch mindestens ein Modell von mehrschichtigen neuronalen Netzen aufweist, wobei die Verarbeitung **dadurch gekennzeichnet, dass** sie mindestens zwei aufeinanderfolgende Phasen aufweist, die aus einer ersten Verarbeitung in einem überwachten Modus, das heißt durch Suchen nach bereits bekannten und identifizierten Sendern in Datenbanken, und einer zweiten Verarbeitung in einem nicht überwachten Modus bestehen, das heißt durch Suchen nach nicht bekannten Sendern, die nicht in Datenbanken referenziert sind, wobei das Verfahren einen Schritt eines Konditionierens vor der Verarbeitung umfasst, und wobei das mindestens eine Modell basierend auf validierten Ergebnissen trainiert wird, die durch die Abfragedatenbank (BDR) bereitgestellt werden, wobei der Schritt des Konditionierens ein Gruppieren der Impulsdeskriptoren (PDW) im Vergleich zu mindestens einem Parameter von mindestens der Frequenz und der Dauer der Impulse umfasst.

2. Verfahren nach Anspruch 1, **dadurch gekennzeichnet, dass** das Gruppieren aus dem Konditionierungsschritt ein parametrisches Gruppieren oder ein densitometrisches Gruppieren ist, bei dem die Basisradardaten verwendet werden, um mindestens einen der folgenden Parameter zu berechnen:
- Frequenzstreuung
- Dauerstreuung
- Pegelstreuung
- Streuung der Impulswiederholungsperiode (PRI),
- Histogramm der Frequenz,
- Histogramm der Dauer,
- Histogramm des Pegels,
- Histogramm der Impulswiederholungsperiode (PRI),
- Positionsdaten,
- am häufigsten vorkommende Modulation.

3. Verfahren nach Anspruch 1, **dadurch gekennzeichnet, dass** das Gruppieren aus dem Konditionierungsschritt ein Gruppieren durch Tiling unter Verwendung der Basisradardaten zum Berechnen mindestens eines der folgenden Parameter ist:
- Frequenz,
- Impulsdauer,
- Pegel,
- Differenz (DTOA) zwischen aufeinanderfolgenden Ankunftszeiten der Impulsdeskriptoren (PDW).

4. Verfahren nach einem der Ansprüche 1 bis 3,
**dadurch gekennzeichnet, dass** das Modell von neuronalen Netzen ein Modell vom Typ Multi-Layer-Perzeptron (MLP) ist.

5. Verfahren nach einem der Ansprüche 1 bis 3,
**dadurch gekennzeichnet, dass** das Modell von neuronalen Netzen ein Modell vom Typ eines konvolutionalen neuronalen Netzes (CNN) ist.

6. Verfahren nach einem der Ansprüche 1 bis 3,
**dadurch gekennzeichnet, dass** das Modell von neuronalen Netzen ein Modell vom Typ eines rekurrenten neuronalen Netzes (RNN) ist.

7. Verfahren nach Anspruch 1, **dadurch gekennzeichnet, dass** die überwachte Verarbeitung einen Deep-Learning-Algorithmus verwendet.

8. Verfahren nach einem der Ansprüche 1, **dadurch gekennzeichnet, dass** die nicht überwachte Verarbeitung einen Algorithmus zum Klassifizieren nach Gruppen (Clustering) verwendet.

9. Radarquellenidentifizierungssystem, umfassend Computermittel zum Verarbeiten von Daten, die zum Verarbeiten der durch Radarsensoren erzeugten Daten geeignet sind, **dadurch gekennzeichnet, dass** die Computermittel Anweisungen ausführen, die die Implementierung des Verfahrens nach einem der Ansprüche 1 bis 8 ermöglichen.

## Claims

1. A method of radar source identification, from a signal generated by at least one radar pulse sensor, implemented in a radar identification system accessing at least one intelligence database (BDR), said sensor detecting and characterizing the pulses produced by the radars in presence around the sensor by generating said signal in the form of pulse descriptors (PDW), the method comprising at least one processing of the data by at least one multi-layer neural network model, said processing being **characterized in that** it comprises at least two successive phases consisting of a first processing in supervised mode, that is to say by searching for already known and identified transmitters in databases and a second processing in unsupervised mode, that is to say by searching for unknown transmitters which are not referenced in databases, the method comprising a step of conditioning prior to said processing, and said at least one model is trained on the basis of validated results provided by the intelligence database (BDR), the conditioning step comprising a clustering of the pulse descriptors (PDW) by comparison of at least one parameter from at least the frequency and the duration of the pulses.

2. The method according to claim 1, **characterized in that** the clustering of the conditioning step is a parametric clustering or densitometric clustering using the basic radar data to calculate at least one of the following parameters:
- Frequency dispersion
- Duration dispersion
- Level dispersion
- Pulse Repeat Period (PRI) dispersion,
- Frequency histogram,
- Duration histogram,
- Level histogram,
- Pulse Repeat Period (PRI) histogram,
- Position data,
- Last modulation

3. The method according to claim 1, **characterized in that** the clustering of the conditioning step is a clustering by layering using the basic radar data to calculate at least one of the following parameters:
- Frequency,
- Pulse duration,
- Level
- The difference (DTOA) between the successive arrival times of the pulse descriptors (PDW).

4. The method according to one of claims 1 to 3, **characterized in that** said neural network model is a multi-layer perceptron (MLP) type model.

5. The method according to one of claims 1 to 3, **characterized in that** said neural network model is a convolutional neural network (CNN) type model.

6. The method according to one of claims 1 to 3, **characterized in that** said neural network model is a recurrent neural network (RNN) type model.

7. The method according to claim 1, **characterized in that** the supervised processing uses a deep learning algorithm.

8. The method according to one of claims 1, **characterized in that** the unsupervised processing uses a clustering algorithm

9. A radar source identification system, comprising computer data processing means able to process the data generated by radar sensors, **characterized in that** the computer means execute instructions enabling the implementation of the method according to one of claims 1 to 8.
